# EUROPEAN PATENT APPLICATION

(11) **EP 4 641 885 A1**
(43) Date of publication of application: **29.10.2025**
(21) Application number: 25167719.1
(22) Date of filing: 01.04.2025
(51) Int. Cl.: H02K 1/02, H02K 3/26, H02K 21/14, H02K 21/24, H02K 41/03

(54) **MOTOR COIL SUBSTRATE**

(30) Priority: 22.04.2024 JP 2024069331
(71) Applicant: SHINSHU UNIVERSITY, Matsumoto City, Nagano, 390-8621 (JP); Sanyo Denki Co., Ltd., Toshima-ku, Tokyo 170-8451 (JP)
(72) Inventor: MIZUNO, Tsutomu, Nagano, 380-8553 (JP); HORIUCHI, Manabu, Tokyo, 170-8451 (JP)
(74) Representative: Mathys & Squire

(57) **Abstract**

Provided is a motor coil substrate including a printed circuit board including an insulating substrate, in which a wiring pattern is disposed on the printed circuit board, the wiring pattern is configured to form a motor coil provided on either a stator or a moving body of a motor, and at least a portion of the insulating substrate includes a soft magnetic body.

## Description

### BACKGROUND

### 1. Technical Field

The present disclosure relates to a motor coil substrate.

### 2. Related Art

A coil substrate for a coreless motor including a flexible printed circuit board has been proposed. For example, JP-A-2021-197446 discloses a technology for forming a coil winding for a coreless motor using a flexible printed circuit board rolled into a cylindrical shape. A wiring pattern is disposed on the printed circuit board. This makes it possible to form a coreless winding that has a high space factor, is simple, and is inexpensive.

### SUMMARY

A motor coil substrate according to the present embodiment includes a printed circuit board including an insulating substrate, in which a wiring pattern is disposed on the printed circuit board, the wiring pattern is configured to form a motor coil provided on either a stator or a moving body of a motor, and at least a portion of the insulating substrate includes a soft magnetic body.

### BRIEF DESCRIPTION OF DRAWINGS

Fig. 1 is a top view of a motor coil substrate according to a first embodiment.
Fig. 2 is a perspective view of the motor coil substrate of Fig. 1 that is rolled into a cylindrical shape.
Fig. 3 is a perspective sectional view of a radial gap type rotary motor used in the first embodiment.
Fig. 4 is a horizontal sectional view perpendicular to a rotation axis of the radial gap type rotary motor used in the first embodiment.
Fig. 5 is a partial enlarged view of Fig. 4.
Fig. 6 is a graph illustrating joule losses of motor coil substrates of models 1 to 4.
Fig. 7 is a graph illustrating joule losses of magnetic properties 1 to 6 of a soft magnetic material in model 4.
Fig. 8 is a diagram illustrating joule loss density distribution in model 1 (reference example).
Fig. 9 is a diagram illustrating joule loss density distribution in model 4.
Fig. 10 is an explanatory diagram of a magnetic flux path in Fig. 8.
Fig. 11 is an explanatory diagram of a magnetic flux path in Fig. 9.
Fig. 12 is a perspective view of a cylinder linear motor used in a second embodiment.
Fig. 13 is a perspective view of an axial gap type rotary motor used in a third embodiment.
Fig. 14 is a perspective view of a flat linear motor used in a fourth embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

However, a coil substrate disclosed in JP-A-2021-197446 has a problem that AC copper loss such as winding eddy current loss or circulating current loss increases when a frequency of an AC current flowing through a coil winding increases.

An object of the present embodiment is to form a motor coil that has a high space factor, is simple, and is inexpensive, thereby suppressing the AC copper loss when a motor is driven at high speed, and thereby providing a motor coil substrate that enables high output and high efficiency drive.

A motor coil substrate according to the present embodiment includes a printed circuit board including an insulating substrate, in which a wiring pattern is disposed on the printed circuit board, the wiring pattern is configured to form a motor coil provided on either a stator or a moving body of a motor, and at least a portion of the insulating substrate includes a soft magnetic body.

According to the present embodiment, it is possible to form a coil that has a high space factor, is simple, and is inexpensive. As a result, the AC copper loss is suppressed when the motor is driven at high speed. Therefore, it is possible to provide the motor coil substrate that enables high output and high efficiency drive.

The present embodiment will now be described with reference to the drawings. Note that in description of embodiments, for convenience of explanation, descriptions of components having the same reference numbers as components already described will be omitted. Further, for convenience of explanation, a dimension of each component illustrated in the drawings may be different from an actual dimension of each component.

### First embodiment

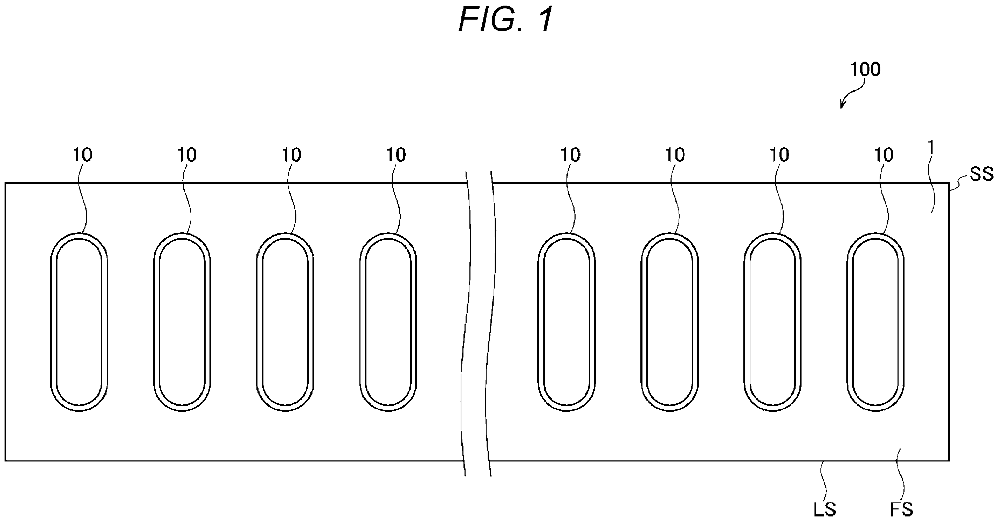

Fig. 1 is a top view of the motor coil substrate according to a first embodiment. A motor coil substrate 100 illustrated in Fig. 1 is a printed circuit board including an insulating substrate 1. A plurality of wiring patterns 10 is arranged on one surface FS of the substrate 1. The substrate 1 is a rectangular flexible substrate having short sides SS and long sides LS. Each of the plurality of wiring patterns 10 has an elliptical shape with a major axis extending along the short sides SS. Further, the wiring patterns 10 are arranged at approximately equal intervals to form the motor coil.

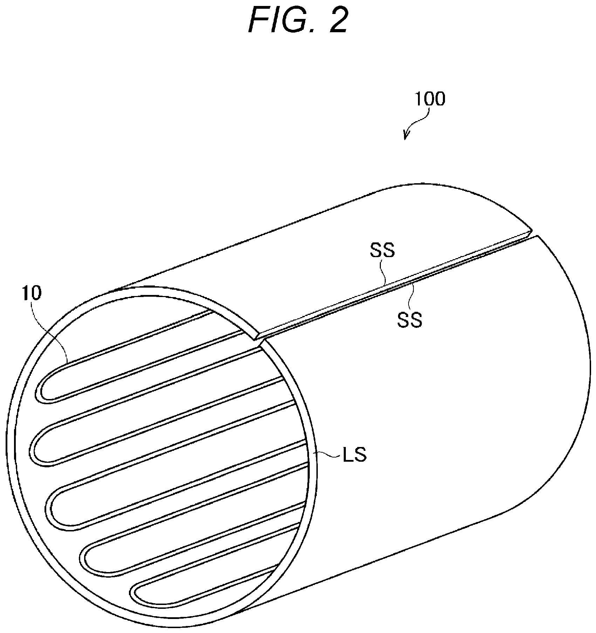

Fig. 2 is a perspective view of the motor coil substrate of Fig. 1 that is rolled into a cylindrical shape. In an example of Fig. 2, the motor coil substrate 100 illustrated in Fig. 1 is rolled in an extending direction of the long side LS, and one short side SS is connected to the other short side SS. This forms a cylindrical motor coil substrate. Note that the motor coil substrate 100 illustrated in Fig. 1 has a single-layer structure. However, the motor coil substrate 100 may have a multilayer structure. In addition, in configuration of the motor coil substrate 100 illustrated in Fig. 1, a plurality of the motor coil substrates 100 may be stacked and rolled into the cylindrical shape. Alternatively, one motor coil substrate 100 may be wound multiple times in the extending direction of the long side LS and rolled into the cylindrical shape. This forms a cylindrical motor coil substrate including a plurality of coil substrate layers.

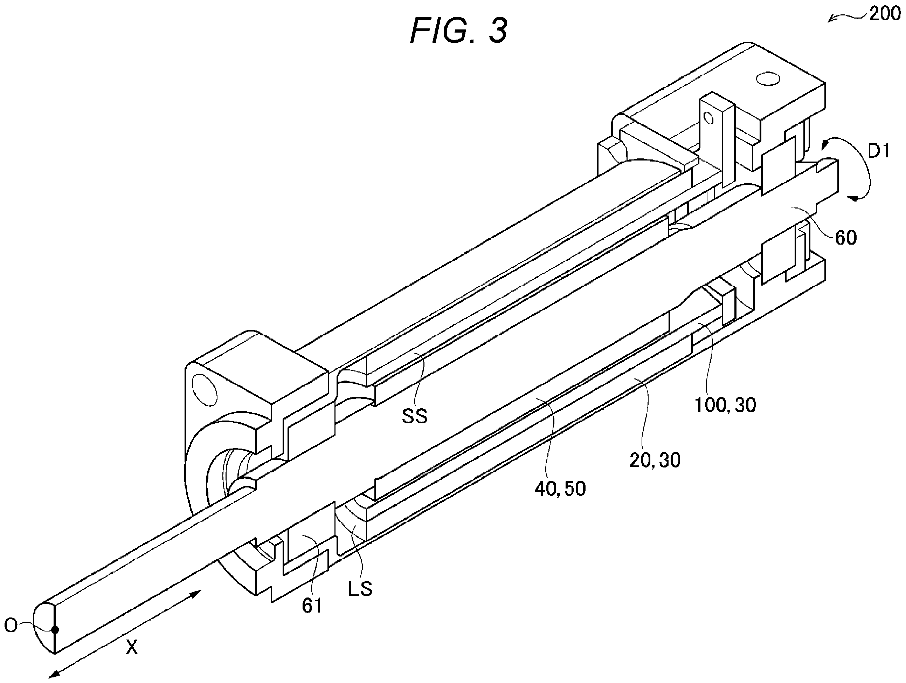

Fig. 3 is a perspective sectional view of a radial gap type rotary motor used in the first embodiment. A radial gap type rotary motor 200 includes a stator 30 and a rotor 50 which is one of moving bodies.

The stator 30 has a cylindrical motor coil substrate 100 and a ring-shaped back yoke 20 including the soft magnetic body, which are illustrated in Fig. 2. The rotor 50 has a cylindrical permanent magnet 40 and a shaft support portion 61. The rotor 50 is rotatable relative to the stator 30 in a direction (D1 direction) along the long side LS of the cylindrical motor coil substrate 100. A drive shaft 60 rotatable about a rotation center O is supported by the shaft support portion 61 inside the permanent magnet 40.

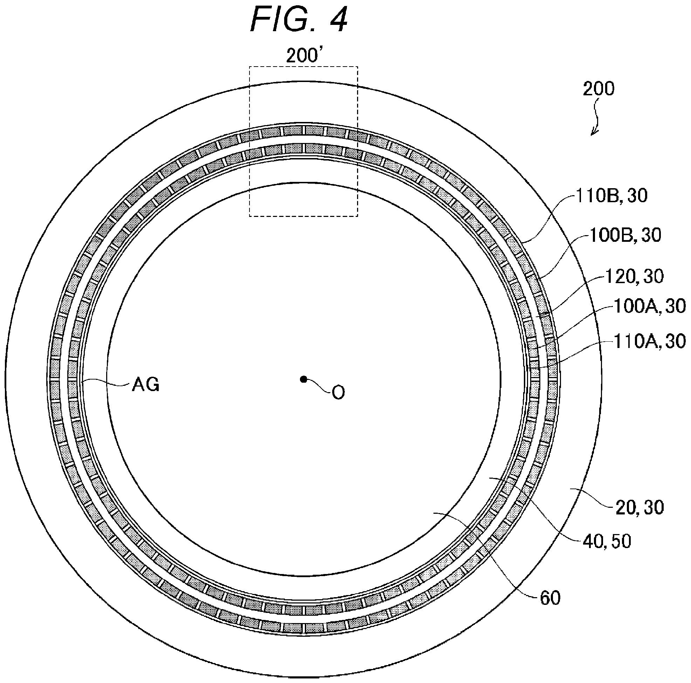

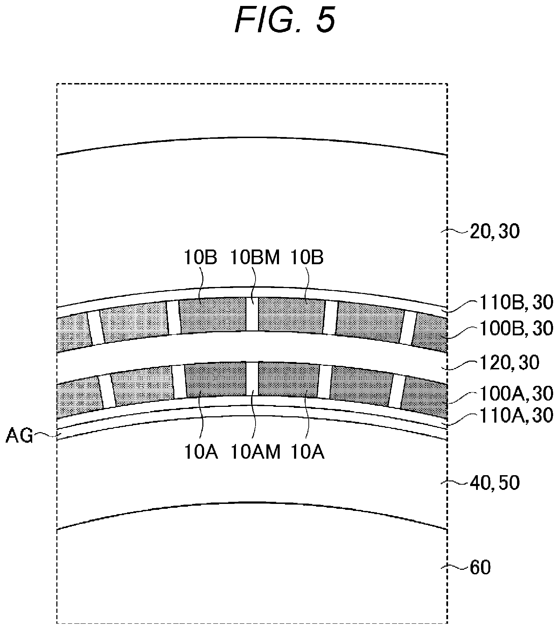

Fig. 4 is a horizontal sectional view perpendicular to a rotation axis direction (X direction in Fig. 3) of the radial gap type rotary motor used in the first embodiment. Fig. 5 is a partial enlarged view of a region 200' in Fig. 4. In configuration of the embodiment illustrated in Fig. 4 and Fig. 5, a motor coil substrate 100 having a five-layer structure is rolled into a cylindrical shape. Five layers of the motor coil substrate 100 include a first surface layer 110A, a first coil layer 100A, an intermediate layer 120, a second coil layer 100B, and a second surface layer 110B in this order from a radial inside to a radial outside. The plurality of wiring patterns 10 is arranged in the first coil layer 100A and the second coil layer 100B. An air gap AG is provided between the first surface layer 110A and the permanent magnet 40. No member is present in the air gap AG. Air is present in the air gap AG.

In Fig. 5, the plurality of wiring patterns 10 in the first coil layer 100A is defined as a first wiring pattern 10A. A portion between two circumferentially adjacent first wiring patterns 10A is defined as a first portion 10AM. Similarly, the plurality of wiring patterns 10 in the second coil layer 100B is defined as a second wiring pattern 10B. A portion between two circumferentially adjacent second wiring patterns 10B is defined as a second portion 10BM. In the present embodiment, the substrate 1 has a five-layer structure including the first surface layer 110A, the first coil layer 100A, the intermediate layer 120, the second coil layer 100B, and the second surface layer 110B. At least a portion of the substrate 1 includes the soft magnetic body. Note that the soft magnetic body may be molded by kneading magnetic powder into rubber or elastomer polymer. Here, the magnetic powder is obtained by processing a soft magnetic material into a powder form. Thus, the soft magnetic body also becomes a flexible material like the substrate 1. Therefore, it is possible to roll the motor coil substrate as illustrated in Figs. 4 and 5.

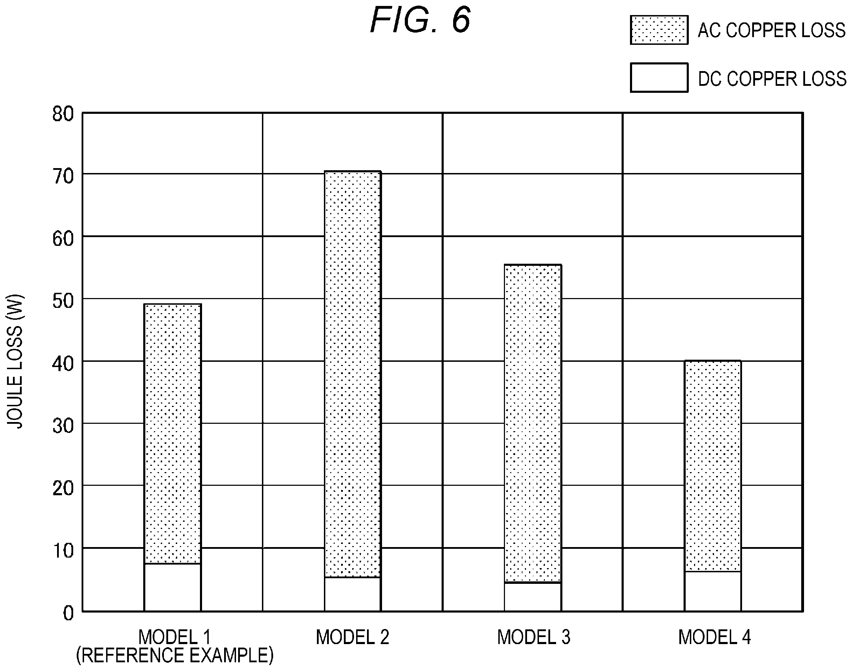

Next, measurement results of joule loss occurring in the motor coil substrate 100 will be described. Fig. 6 is a graph illustrating joule losses of the motor coil substrates 100 of models 1 to 4. A horizontal axis represents models of the radial gap type rotary motor. A vertical axis represents the joule loss. Model 1 is a reference example for explaining the present embodiment. All of the intermediate layer 120, first surface layer 110A, second surface layer 110B, first portion 10AM, and second portion 10BM contain a non-magnetic material. In model 2, the intermediate layer 120, first surface layer 110A, and second surface layer 110B contain the soft magnetic material. The first portion 10AM and second portion 10BM contain the non-magnetic material. In model 3, all of the intermediate layer 120, first surface layer 110A, second surface layer 110B, first portion 10AM, and second portion 10BM contain the soft magnetic material. In model 4, the intermediate layer 120, first surface layer 110A, and second surface layer 110B contain non-magnetic material. The first portion 10AM and second portion 10BM contain the soft magnetic material. The joule losses illustrated in Fig. 6 are sums of DC copper loss and AC copper loss of models 1 to 4 when the motor is driven at a high speed of 100,000 rpm.

Comparing the joule losses of models 1 to 4, model 4 has the lowest joule loss. No significant difference is observed in the DC copper loss of models 1 to 4. On the other hand, the AC copper loss of model 4 is approximately 20% lower than the AC copper loss of model 1. Therefore, by forming only portions between adjacent wiring patterns 10 from the soft magnetic material as in model 4, it is possible to suppress the AC copper loss when the motor is driven at high speed.

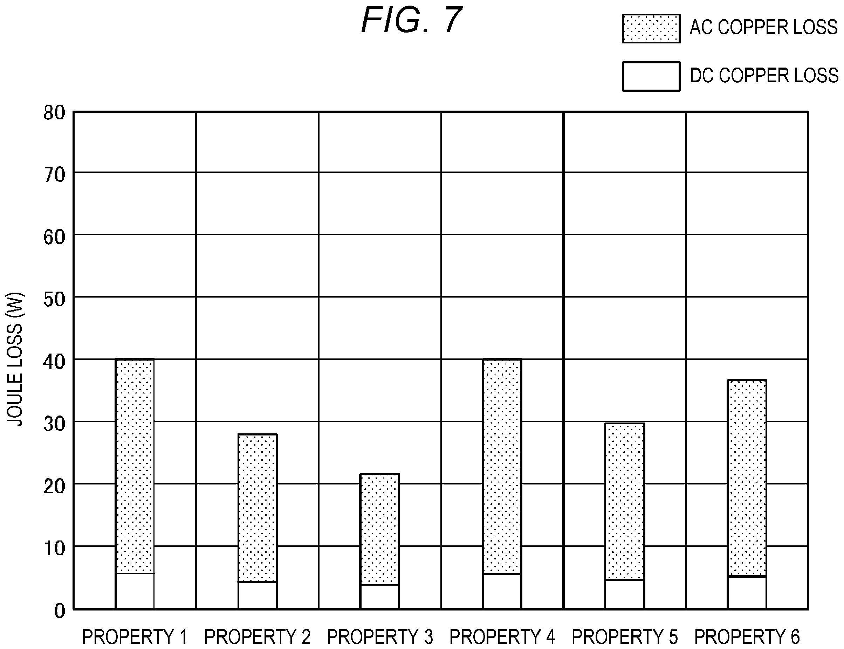

Fig. 7 is a graph illustrating joule losses of magnetic properties 1 to 6 of the soft magnetic material in model 4. The horizontal axis represents the magnetic properties of the soft magnetic material. The vertical axis represents the joule loss. In property 1, relative permeability µr = 10 and saturation magnetization Ms = 0.5T. In property 2, the relative permeability µr = 10 and the saturation magnetization Ms = 1.0T. In property 3, the relative permeability µr = 10 and the saturation magnetization Ms = 1.5T. In property 4, the relative permeability µr = 5000 and the saturation magnetization Ms = 0.5T. In property 5, the relative permeability µr = 5000 and the saturation magnetization Ms = 1.0T. In property 6, the relative permeability µr = 5000 and the saturation magnetization Ms = 1.5T. As illustrated in Fig. 7, the joule loss is the lowest when the soft magnetic material has magnetic properties of property 3 (relative permeability µr = 10, saturation magnetization Ms = 1.5T). The AC copper loss of property 3 is approximately 54.5% lower than the AC copper loss of property 1. Such optimal magnetic properties vary depending on the configuration, shape, and size of the motor coil substrate 100 and an amount of magnetic flux of the permanent magnet 40. Therefore, a soft magnetic material having optimal magnetic properties can be selected based on the configuration, shape, and size of the motor coil substrate 100 and the amount of magnetic flux of the permanent magnet 40.

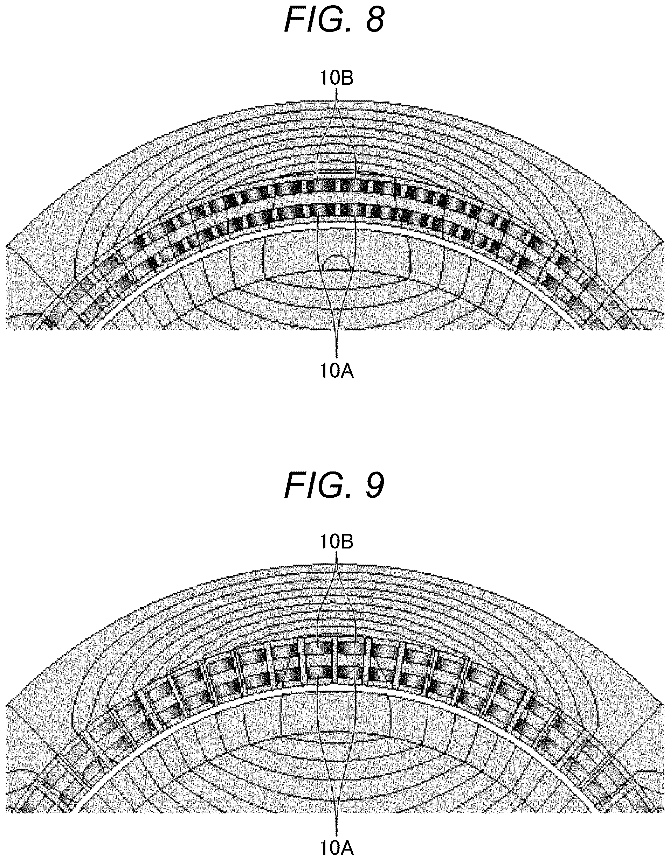

Fig. 8 is a diagram illustrating joule loss density distribution in model 1 (reference example). Fig. 9 is a diagram illustrating the joule loss density distribution in model 4. In Figs. 8 and 9, joule loss distribution for one pole in the first wiring pattern 10A and the second wiring pattern 10B is illustrated with black density. The darker the black, the greater the joule loss at that portion. In addition, magnetic field lines are also illustrated in Figs. 8 and 9.

As illustrated in Fiig. 8, in model 1 (reference example), the joule losses in the first wiring pattern 10A and the second wiring pattern 10B are large. In contrast, as illustrated in Fig. 9, in model 4, the joule loss in the first wiring pattern 10A and the second wiring pattern 10B is reduced compared to model 1 (reference example).

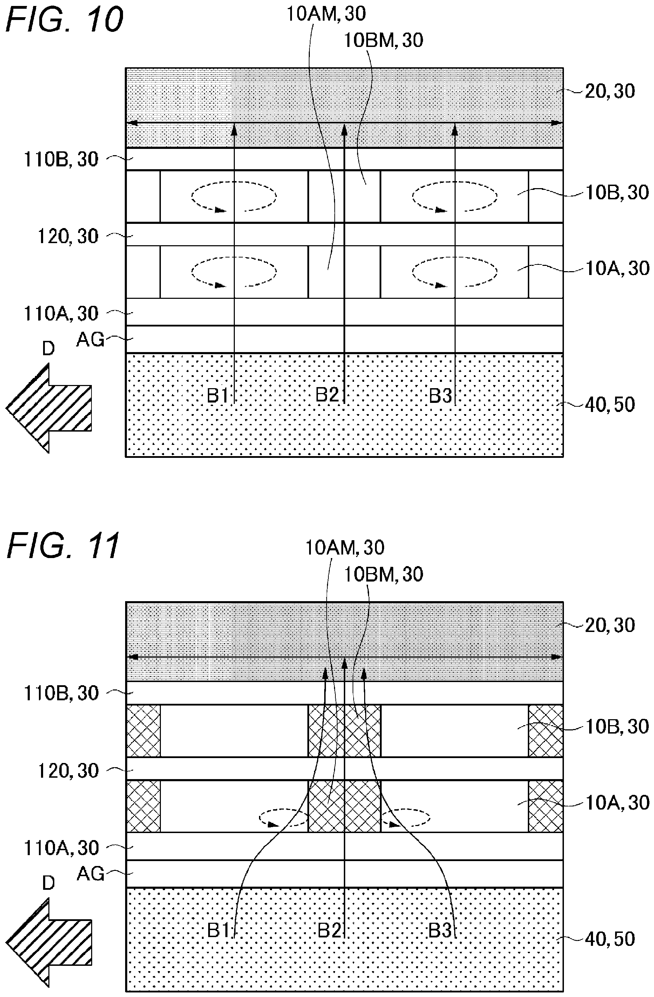

Next, a principle of reducing the AC copper loss of the coil substrate containing the soft magnetic material will be described using Figs. 10 and 11. Fig. 10 is an explanatory diagram of a magnetic flux path in Fig. 8. Fig. 11 is an explanatory diagram of the magnetic flux path in Fig. 9.

As illustrated in Fig. 10, in model 1 (reference example), magnetic fluxes B1 to B3 are generated by a magnetomotive force of the permanent magnet 40 of the rotor 50. The magnetic fluxes B1 and B3 are interlinked with the first wiring pattern 10A and the second wiring pattern 10B. The magnetic flux B2 is interlinked with the first portion 10AM and the second portion 10BM. The first wiring pattern 10A, the second wiring pattern 10B, and the first portion 10AM and second portion 10BM containing the non-magnetic material have approximately the same relative permeability. Therefore, a difference in the amount of magnetic flux is small. As a result, the magnetic flux is uniformly interlinked. In such a state, the permanent magnet 40 moves in a D direction. Therefore, a speed electromotive force is generated in the permanent magnet 40. Then, an eddy current is generated in each of the first wiring pattern 10A and the second wiring pattern 10B. Such eddy currents are a cause of the AC copper loss. Note that the magnetic fluxes B1 to B3 are schematic representations of the magnetic fluxes generated by the magnetomotive force of the permanent magnet 40.

On the other hand, as illustrated in Fig. 11, in model 4, the first portion 10AM and the second portion 10BM contains the magnetic material. Therefore, the relative permeability of the first portion 10AM and the second portion 10BM is greater than that of the first wiring pattern 10A and the second wiring pattern 10B. Therefore, the magnetic fluxes B1 to B3 are mainly interlinked with the first portion 10AM and the second portion 10BM. Therefore, the eddy currents generated in the first wiring pattern 10A and the second wiring pattern 10B are reduced. This makes it possible to reduce the AC copper loss. Note that in the radial gap type rotary motor 200 illustrated in Fig. 3, a tangential direction of a rotation direction (the D1 direction) of the rotor 50 can be interpreted as the D direction illustrated in Fig. 11. Therefore, the principle of reducing the AC copper loss of the motor coil substrate 100 of the radial gap type rotary motor 200 illustrated in Fig. 3 can be explained by the explanatory diagram of Fig. 11.

### Second embodiment

As the first embodiment, the configuration of the motor coil substrate used in the radial gap type rotary motor is described. However, the motor coil substrate according to the present embodiment can also be used in motors other than the radial gap type rotary motor. A second embodiment using a cylinder linear motor is described below.

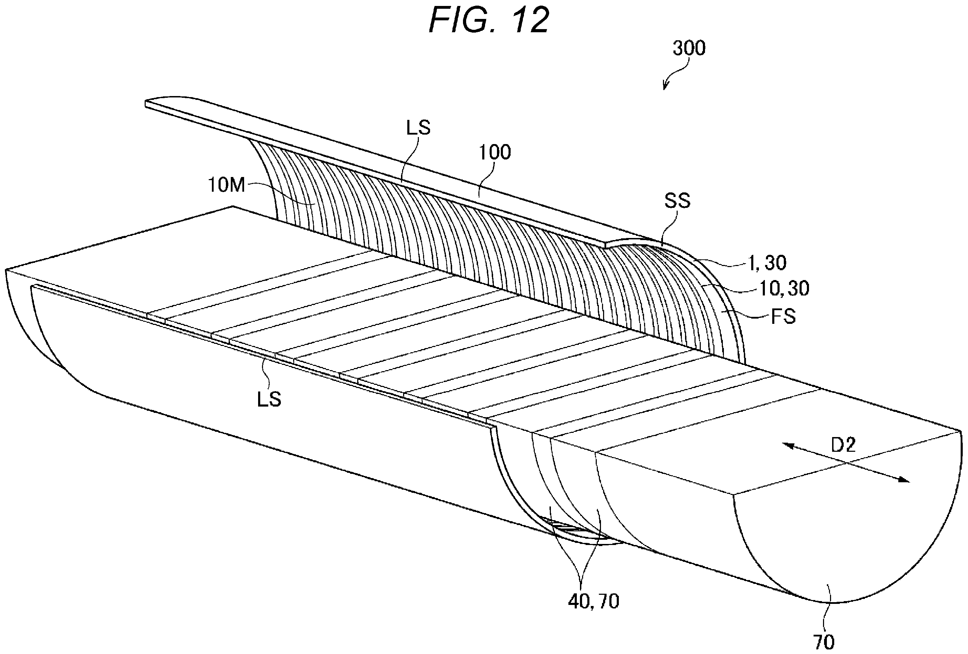

Fig. 12 illustrates a perspective view of the cylinder linear motor used in the second embodiment. In configuration illustrated in Fig. 12, the motor coil substrate 100 illustrated in Fig. 1 is rolled in an extending direction of the short side SS, and one long side LS is connected to the other long side LS. Note that the motor coil substrate 100 illustrated in Fig. 12 has a single-layer structure. However, the motor coil substrate 100 illustrated in Fig. 12 may have a multilayer structure. In addition, in the configuration of the cylindrical motor coil substrate 100 illustrated in Fig. 12, the plurality of motor coil substrates 100 may be stacked and rolled into the cylindrical shape. Alternatively, one motor coil substrate 100 may be wound multiple times in the extending direction of the short side SS and rolled into the cylindrical shape. This forms a cylindrical motor coil substrate including the plurality of coil substrate layers. In addition, in Fig. 12, a portion of the motor coil substrate 100 is omitted in order to explain an internal structure of a cylinder linear motor 300.

As illustrated in Fig. 12, the cylinder linear motor 300 includes a stator 30 and a mover 70 which is one of the moving bodies.

The stator 30 has the motor coil substrate 100 on one surface FS of the insulating substrate 1. The motor coil substrate 100 includes a flexible printed circuit board rolled into the cylindrical shape. The plurality of wiring patterns 10 is arranged on the printed circuit board. The mover 70 has a plurality of the permanent magnets 40. The mover 70 is movable relative to the stator 30 in a direction (D2 direction) along the long side LS of the motor coil substrate 100.

As in the first embodiment, in the second embodiment, at least a portion of the substrate 1 contains the soft magnetic material. This suppresses the AC copper loss when the motor is driven at high speed. As a result, the motor can be driven with high output and high efficiency. In particular, the wiring patterns 10 are adjacent to each other in a direction of relative movement between the stator 30 and the mover 70. Only a portion 10M between the wiring patterns 10 adjacent to each other includes the soft magnetic material. This achieves the above-mentioned effects.

### Third and fourth embodiments

In the first and second embodiments, the flexible motor coil substrate rolled into the cylindrical shape is used. However, the motor coil substrate can also be used in the motor in a flat state without being rolled. A third embodiment using an axial gap type rotary motor and a fourth embodiment using a flat linear motor are described below. Note that in the third and fourth embodiments, the motor coil substrate is not limited to a flexible substrate.

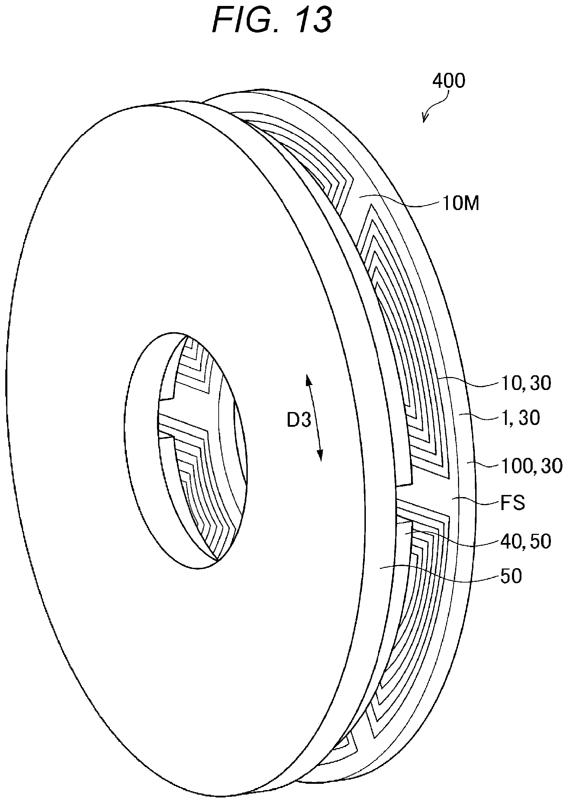

Fig. 13 illustrates a perspective view of the axial gap type rotary motor used in the third embodiment. As illustrated in Fig. 13, an axial gap type rotary motor 400 includes the stator 30 and the rotor 50 which is one of the moving bodies.

The stator 30 has the motor coil substrate 100 on one surface FS of an insulating ring-shaped substrate 1. A plurality of approximately trapezoidal wiring patterns 10 is arranged on the motor coil substrate 100. The motor coil substrate 100 illustrated in Fig. 13 has a single-layer structure. However, the motor coil substrate 100 may have a multilayer structure. The rotor 50 has the plurality of permanent magnets 40. The rotor 50 is rotatable relative to the stator 30 in a circumferential direction (D3 direction) of the motor coil substrate 100.

Also, in the third embodiment, at least a portion of the substrate 1 contains the soft magnetic material. This suppresses the AC copper loss when the motor is driven at high speed. As a result, the motor can be driven with high output and high efficiency. In particular, the wiring patterns 10 are adjacent to each other in a direction of relative movement between the stator 30 and the rotor 50. Only a portion 10M between the wiring patterns 10 adjacent to each other includes the soft magnetic material. This achieves the above-mentioned effects.

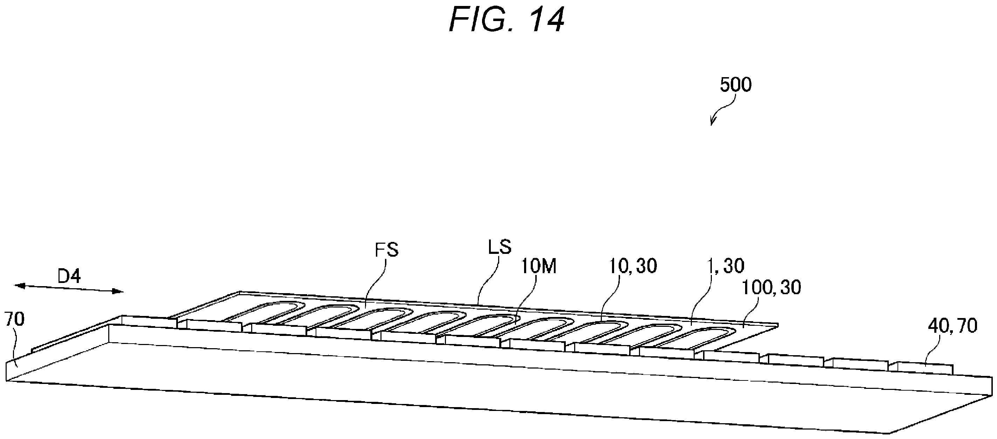

Fig. 14 illustrates a perspective view of the flat linear motor used in the fourth embodiment. As illustrated in Fig. 14, a flat linear motor 500 includes the stator 30 and the mover 70 which is one of the moving bodies.

The stator 30 has the motor coil substrate 100 on one surface FS of an insulating rectangular substrate 1. The plurality of wiring patterns 10 is arranged on the motor coil substrate 100. The motor coil substrate 100 illustrated in Fig. 14 has a single-layer structure. However, the motor coil substrate 100 may have a multilayer structure. The mover 70 has the plurality of permanent magnets 40. The mover 70 is movable relative to the stator 30 in a direction (D4 direction) along the long side LS of the motor coil substrate 100.

Also, in the fourth embodiment, at least a portion of the substrate 1 contains the soft magnetic material. This suppresses the AC copper loss when the motor is driven at high speed. As a result, the motor can be driven with high output and high efficiency. In particular, the wiring patterns 10 are adjacent to each other in a direction of relative movement between the stator 30 and the mover 70. Only a portion 10M between the wiring patterns 10 adjacent to each other includes the soft magnetic material. This achieves the above-mentioned effects.

As described above, the printed circuit board is used for the motor coil substrate 100 according to the present embodiment. This makes it possible to form the motor coil that has a high space factor, is simple, and is inexpensive. Further, the soft magnetic material is used for at least a portion of the substrate. This reduces the AC copper loss when the motor is driven at high speed. As a result, the motor can be driven with high output and high efficiency.

Note that in each of the configurations explained in the first to fourth embodiments described above, the motor coil is provided on the stator. Then, the motor coil substrate 100 is used for the motor coil. Furthermore, the permanent magnet is provided on the rotor or the moving body. However, the present embodiment is not limited to these described embodiments. In the configuration of the present embodiment, the permanent magnet may be provided on the stator, and the motor coil may be provided on the moving body. In this case, the motor coil substrate 100 is used for the motor coil.

Further, in the first to fourth embodiments described above, the wiring pattern 10 is elliptical or substantially trapezoidal. However, the shape of the wiring pattern used in the present embodiment is not limited to these first to fourth embodiments. Any wiring pattern having a loop shape that functions as the motor coil can be used.

The embodiment has been described above. However, it goes without saying that the technical scope of the embodiments should not be interpreted as limited by the description of the embodiments. The embodiments described are merely examples. It is understood by those skilled in the art that various forms of modifications to the described embodiments are possible within the scope of the disclosure of the claims. The technical scope of the embodiments should be determined based on the scope of the disclosure of the claims and its equivalents.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A motor coil substrate comprising a printed circuit board including an insulating substrate, wherein
a wiring pattern is disposed on the printed circuit board,
the wiring pattern is configured to form a motor coil provided on either a stator or a moving body of a motor, and
at least a portion of the insulating substrate includes a soft magnetic body.

2. The motor coil substrate according to claim 1, wherein
a plurality of the wiring patterns is arranged in a direction of relative movement between the stator and the moving body, and
only a portion between the wiring patterns adjacent to each other in the direction of the relative movement includes the soft magnetic body.

3. The motor coil substrate according to claim 1, wherein
the printed circuit board is a flexible substrate rolled into a cylindrical shape, and
the wiring pattern is configured to form a coil for a rotary motor or a coil for a cylinder linear motor.

4. The motor coil substrate according to claim 2, wherein
the printed circuit board is a flexible substrate rolled into a cylindrical shape, and
the wiring pattern is configured to form a coil for a rotary motor or a coil for a cylinder linear motor.

5. The motor coil substrate according to any one of claims 1 to 4, wherein
the soft magnetic body contains magnetic powder kneaded into rubber or elastomer, and
the magnetic powder contains a powdered soft magnetic body.
